# EUROPÄISCHE PATENTSCHRIFT

(11) **EP 1 040 544 B1**
(45) Veröffentlichungstag und Bekanntmachung des Hinweises auf die Patenterteilung: **17.10.2001**
(21) Anmeldenummer: 98955482.9
(22) Anmeldetag: 19.10.1998
(51) Int. Cl.: H02G 3/30, F16B 13/02, F16L 3/08

(54) **STECKDÜBEL**
DOWEL
CHEVILLE

(30) Priorität: 19.12.1997 DE 19756764
(43) Veröffentlichungstag der Anmeldung: 04.10.2000
(73) Patentinhaber: fischerwerke Artur Fischer GmbH & Co. KG, 72178 Waldachtal (DE)
(72) Erfinder: FISCHER, Rainer, D-72178 Waldachtal (DE)
(86) Internationale Anmeldenummer: EP9806613
(87) Internationale Veröffentlichungsnummer: WO9933153

(56) Entgegenhaltungen:
- EP-A- 0 479 416
- DE-A- 3 516 922
- DE-A- 19 607 516
- DE-U- 8 328 369
- GB-A- 2 276 193

## Beschreibung

Die Erfindung betrifft einen Steckdübel aus Kunststoff mit mindestens einem in ein Bohrloch einzuführenden Schaft, an dem sich paarweise gegenüberliegend Spreizsegmente befinden. Ein solcher Steckdübel ist aus der Druckschrift DE 196 07 516 A1 bekannt.

Bei diesem bekannten Steckdübel sind die Spreizsegmente als rechtwinklig vom Schaft abstehende Haltelaschen ausgebildet, deren Außenmaß größer ist als der Durchmesser des den Steckdübel aufnehmenden Bohrloches. Dadurch werden die Haltelaschen beim Einschieben des Steckdübels in das Bohrloch pfeilartig in Richtung Bohrlochmündung verschwenkt, wobei durch die Rückstellkraft der Haltelaschen eine Verankerungswirkung entsteht. Der auf der elastischen Rückstellkraft des Materials beruhende Anpressdruck ist jedoch sehr gering, so dass insbesondere bei sehr glatten Bohrlochwandungen mit dem bekannten Steckdübel nur geringe Haltewerte erzielbar sind.

Aus der Druckschrift G 83 28 369.2 ist ein Steckdübel bekannt, der für Befestigungen insbesondere in der Elektrotechnik zum Befestigen von Kabeln verwendet wird. Bei diesem Steckdübel beruht die Haltekraft nicht auf der Spreizwirkung einer in den Dübel eingedrehten Schraube, sondern wird durch bewegliche Spreizsegmente erzeugt.

Diese Spreizsegmente weisen im Bereich ihres Anschlusses an den Schaft des Steckdübels eine Verengung oder Einschnürung derart auf, daß eine senkrecht zur Längsachse des Schaftes liegende Gelenkachse gebildet wird, um die die Segmente gedreht werden, wenn der Steckdübel in ein Bohrloch eingesteckt wird, dessen Lochdurchmesser geringer ist als die Breite des Steckdübels. Das im Bereich der Gelenkachse befindliche Material des Steckdübels erzeugt beim Einstecken des Dübels in das Bohrloch dementsprechend eine relativ geringe Rückstellkraft, die ihrerseits für eine geringe Reibungskraft zwischen den Spreizsegmenten einerseits und der Bohrlochwandung im Verankerungsgrund andererseits sorgen.

Wird der derart im Bohrloch verankerte Steckdübel durch das Gewicht des zu befestigenden Gegenstandes oder andere Zuglasten beansprucht, ergibt sich durch die genannte Reibungskraft, die von der Anlagekraft und dem Reibungskoeffizienten zwischen den Spreizsegmenten und der Bohrlochwandung abhängt, ein Moment, das einen Aufstelleffekt des Steckdübels entgegen der Lastrichtung erzeugt, durch den sich der Dübel bei Belastung im Bohrloch verspannt und dadurch seine Haltekraft erhöht. Bekannt sind Steckdübel mit einem zentralen Schaft, an dem beidseitig solche Spreizsegmente aufgebracht sind, aber auch Steckdübel in Form eines U-Bügels, dessen Schenkel nach außen solche Spreizsegmente tragen.

Der entscheidende Vorteil solcher Steckdübel liegt in der einfachen Montage, es muss lediglich ein Bohrloch im Verankerungsgrund gesetzt werden und der Steckdübel in das Bohrloch eingesteckt werden. Montagezeiten und Kosten für eine Schraube wie bei konventionellen Dübeln entfallen. Da der Steckdübel keine Schraube aufnehmen muss, kann der Anschluss zu einem Halteelement, bspw. zur Umschließung eines Kabels, frei gestaltet werden.

Der Nachteil der bekannten Ausführung liegt in der geringen Rückstellkraft im Bereich der Gelenkachse und damit in der entsprechend geringen Reibungskraft zwischen Spreizsegmenten und Bohrlochwand. Bei ungünstigen äußeren Umständen, zum Beispiel bei sehr glatter Bohrlochwandung und bei einem Bohrlochdurchmesser im oberen Toleranzbereich entstehen praktisch keine nennenswerten Reibungseffekte mehr zwischen Bohrlochwandung und Spreizsegmente, so dass der gewünschte Aufstelleffekt nicht erzeugt werden kann und folglich nur noch eine ungenügende Haltekraft des Dübels gegen äußere Zuglasten erzeugt wird. Ein weiterer Nachteil der bekannten Steckdübel ist darin zu sehen, dass selbst bei ausreichendem Aufstelleffekt und damit guter Verspannung des Dübels im Bohrloch, die maximal erreichbaren Auszugswerte dann von der Abscherfestigkeit der relativ schmal ausgebildeten Gelenkachse begrenzt wird.

Der Erfindung liegt daher die Aufgabe zugrunde, einen Steckdübel zu schaffen, der neben den bekannten Vorteilen bezüglich der einfachen Montage und Entfallen einer Schraube zur Aufspreizung des Dübels höhere Haltekräfte unter jeglichen Einsatzbedingungen aufweist.

Diese Aufgabe wird durch die Merkmale des Anspruches 1 gelöst.

Im Gegensatz zu der bekannten Lösung, bei der die Haltekraft durch den Aufstelleffekt der Spreizsegmente erzeugt wird, wird bei der erfindungsgemäßen Lösung eine Verkeilung der Spreizsegmente erreicht, die bei zunehmender Zuglast durch das Auflaufen des Keilelementes auf der am Schaft ausgebildeten Schrägfläche sich verstärkt.

Beim Einschieben des Steckdübels in das Bohrloch werden die einzelnen Keilelemente der Spreizsegmente in Richtung der Bohrlochmündung verschoben, so dass die Keilelemente in eine Position am Schaft kommen, die vor der Schrägfläche liegt. Nach dem vollständigen Einstecken des Steckdübels in das Bohrloch und bei Angriff einer Zuglast am Schaft des Steckdübels werden die Keilelemente aufgrund ihrer Reibung an der Außenfläche der Bohrlochwandung in Richtung zum Einsteckende des Schaftes verschoben, so dass sie auf die ansteigende Schrägfläche aufgleiten und sich im Bohrloch verkeilen. Diese zwangsweise eintretende Verkeilung führt zu sehr hohen Haltekräften auch bei etwas größer ausgefallenen Bohrlöchern. Bohrlochtoleranzen werden durch geringere oder etwas größere axiale Verschiebung ausgeglichen.

Vorzugsweise weist das Keilelement über einen Teil seiner Länge ein zylinderförmiges Profil auf und ist quer zur Längsrichtung des Schaftes angeordnet, Um eine günstige Anlage an der Bohrlochwandung zu erreichen ist es zweckmäßig, die Außenfläche des Keilelements mit einer dem Bohrlochdurchmesser angepassten Abrundung zu versehen.

Das Keilelement ist über einen rechtwinklig geformten Spritzsteg einstückig am Schaft angebunden. Eine solche Verbindung lässt sowohl die axiale Verschiebung in Richtung Bohrlochmündung beim Einführen des Steckdübels in das Bohrloch zu, als auch die axiale Verschiebung zur Verkeilung des Steckdübels. Durch den Spritzsteg ergibt sich auch eine Rückstellkraft die dafür sorgt, dass auch ohne Angriff einer Zuglast am Schaft nach dem Einführen des Steckdübels in das Bohrloch bereits eine Vorverkeilung stattfindet.

Zweckmäßigerweise sind am Schaft mehrere sich gegenüberliegende Paare von Spreizsegmenten hintereinander angeordnet. Um sicherzustellen, dass alle Spreizsegmente gleichmäßig greifen, ist es vorteilhaft, die nacheinander angeordneten Spreizsegmente über einen Steg miteinander zu verbinden.

Zur besseren Aufnahme von Querkräften und zur Abstützung des Steckdübels im Bereich der Bohrlochmündung kann in einer weiteren Ausführungsform an dem dem Einsteckende gegenüberliegenden hinteren Ende zwei sich gegenüberliegende und in das Bohrloch eingreifende Längsrippen angeordnet sein. Der Steckdübel kann an seinem hinteren Ende einen Flansch zum Befestigen von Gegenständen in Durchsteckmontage aufweisen. Für Kabelbefestigungen ist es jedoch vorteilhaft, die Halterung für das Kabel direkt am hinteren Ende des Steckdübels in Form einer Schelle oder Bügel einstückig anzuformen.

Bei einer weiteren Ausführungsform des erfindungsgemäßen Steckdübels kann dieser zwei Schaftelemente mit jeweils an der Außenfläche angeordneten Spreizsegmenten aufweisen, die die Schenkel eines U-Bügels bilden, dessen Basisabschnitt eine Halterung bildet. Bei dieser Ausführungsform ist es ferner vorteilhaft, die Innenflächen der beiden Schaftelemente im Bereich der Spreizsegmente mit einer Riffelung vorzugsweise in Form von Querrippen zu versehen.

In der Zeichnung sind Ausführungsbeispiele der Erfindung dargestellt. Es zeigen:
- Figur 1: eine perspektivische Ansicht eines Steckdübels mit Flansch
- Figur 2: den in einem Bohrloch verankerten Steckdübel nach Figur 1
- Figur 3: eine Ausführungsvariante des Steckdübels mit angeformter Halterung
- Figur 4: eine weitere Ausführungsvariante des Steckdübels mit zwei einen U-Bügel bildenden Schaftelementen.

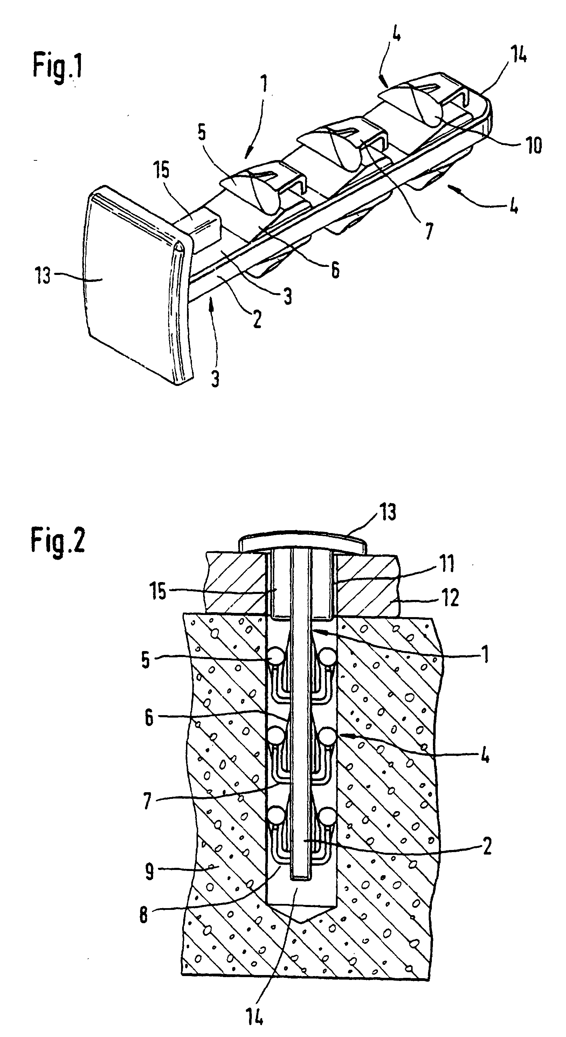

Das in Figur 1 dargestellte Ausführungsbeispiel zeigt einen aus Kunststoff bestehenden und im Spritzgussverfahren hergestellten Steckdübel 1 mit einem plattenförmigen, länglichen Schaft 2, an dessen Außenflächen 3 paarweise sich gegenüberliegende Spreizsegmente 4 angeordnet sind. Ein Spreizsegment 4 wird durch ein Keilelement 5 und einer an der Außenfläche 3 des Schaftes 2 angeformten Schrägfläche 6 gebildet. Das Keilelement 5 ist über einen rechtwinklig geformten Spritzsteg 7 in der Weise an den Schaft 2 angebunden, dass beim Einschieben des Steckdübels in ein Bohrloch das Keilelement 5 in Richtung Bohrlochmündung vor die Schrägfläche 6 axial verschoben wird. Dadurch wird das Außenmaß der beiden sich gegenüberliegenden Keilelemente 5 auf einen dem Durchmesser des Bohrloches 8 im Mauerwerk 9 entsprechenden Außenmaß zusammengedrückt (siehe Figur 2). Um eine flächige Anlage des Keilelementes 5 an der Bohrlochwandung zu erreichen, sind die im Profil zylinderförmigen Keilelemente 5 an ihren nach außen weisenden Flächen mit einer dem Bohrlochdurchmesser entsprechenden Abrundung 10 versehen.

Figur 2 zeigt den in Figur 1 dargestellten Steckdübel 1 im montierten Zustand. Der Steckdübel 1 weist drei Paare von jeweils zwei sich gegenüberliegenden Spreizsegmenten 4 auf. Zur Montage des Steckdübels 1 ist dieser durch die Bohrung 11 des zu befestigenden Gegenstandes 12 in das Bohrloch 8 soweit eingesteckt, bis der am hinteren Ende des Steckdübels 1 angeordnete Flansch 13 auf der Außenfläche des zu befestigenden Gegenstandes 12 aufliegt. Durch die Rückstellkraft des Spritzsteges 7 einerseits und einer durch das Gewicht des zu befestigenden Gegenstandes 12 sich ergebenden Zuglast andererseits wird das Keilelement 5 auf der am Schaft 2 angeformten Schrägfläche 6 soweit in Richtung Einsteckende 14 des Steckdübels 1 verschoben, dass eine Verkeilung im Bohrloch 8 erfolgt. Zur Abstützung des Steckdübels 1 in der Bohrung 11 des zu befestigenden Bauteiles 12 sowie im Bereich der Bohrlochmündung sind am Schaft 2 zwei sich gegenüberliegende längs laufende Rippen 15 angeordnet, deren Außenmaß etwa dem Bohrlochdurchmesser entspricht.

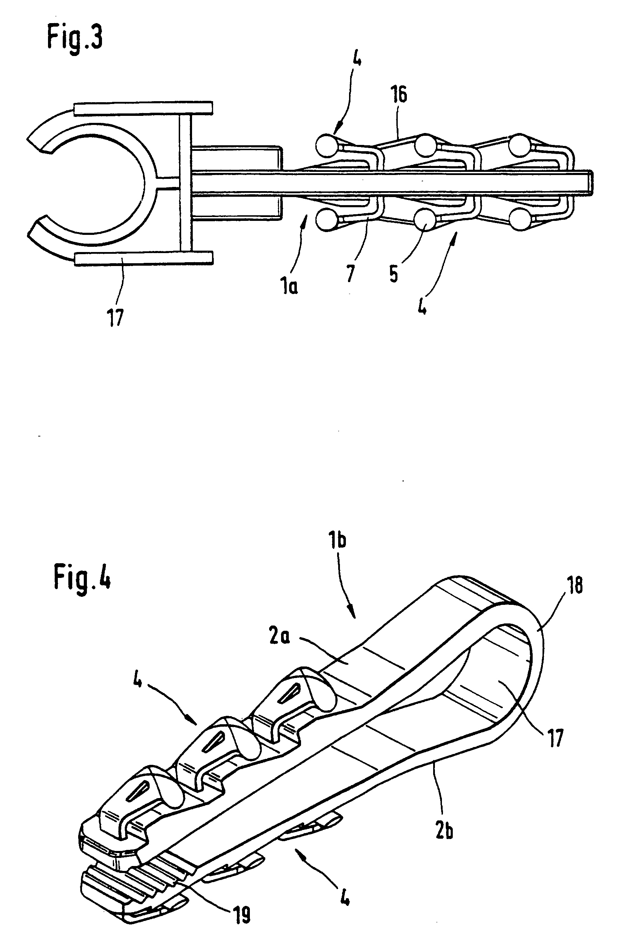

Figur 3 zeigt eine Ausführungsvariante 1a des Steckdübels, bei der die nacheinander angeordneten Spreizsegmente 4 mit einem vom Keilelement 5 zum Spritzsteg 7 führenden Spritzfaden 16 miteinander verbunden sind. Damit wird erreicht, dass alle drei Paare der Spreizsegmente 4 gleichmäßig aufgespreizt werden. Das Ausführungsbeispiel gemäß Figur 3 weist an Stelle eines Flansches 13 eine als Kabelschelle ausgebildete Halterung 17 auf.

In Figur 4 ist eine Variante des Steckdübels 1b dargestellt, die zwei Schaftelemente 2a, 2b mit jeweils an der Außenfläche angeordneten Spreizsegmente 4 aufweist. Die beiden Schaftelemente 2a, 2b bilden die Schenkel eines U-Bügels, dessen Basisabschnitt 18 eine außerhalb des Bohrloches liegende Halterung 17 bilden. Um eine Verschiebung zwischen den beiden Schaftelementen 2a, 2b zu vermeiden, sind die Innenflächen der beiden Schaftelemente 2a, 2b im Bereich der Spreizsegmente über einen Teilbereich mit einer als Querrippen ausgebildeten Riffelung 19 versehen. Eine Riffelung kann auch auf den Außenflächen der Keilelemente 5 aufgebracht werden (nicht dargestellt).

## Patentansprüche

1. Steckdübel aus Kunststoff mit mindestens einem in ein Bohrloch einzuführenden Schaft (2), an dem sich paarweise gegenüberliegend Spreizsegmente (4) befinden, wobei das Spreizsegment (4) durch ein an der Außenfläche (3) des Schaftes (2) axial verschiebbar gehaltenes Keilelement (5) gebildet ist , wobei die Keilelemente (5) über einen Spritzsteg (7) in der Weise an den Schaft (2) angebunden sind, dass beim Einschieben des Steckdübels in ein Bohrloch das Keilelement (5) in Richtung der Bohrlochmündung vor eine in Richtung zum Einsteckende (14) des Steckdübels (1) ansteigenden und am Schaft (2) ausgebildeten Schrägfläche (6) axial verschoben wird und das Außenmaß der beiden sich gegenüberliegenden Keilelemente (5) auf einen dem Durchmesser des Bohrloches (8) im Mauerwerk (9) entsprechenden Außenmaß zusammengedrückt wird, und dass bei Angriff einer Zuglast am Schaft (2) das Keilelement (5) auf der Schrägfläche (6) soweit in Richtung Einsteckende (14) des Steckdübels (1) verschoben wird, dass eine Verkeilung im Bohrloch (8) erfolgt.

2. Steckdübel nach Anspruch 1, **dadurch gekennzeichnet, dass** das Keilelement (5) über einen Teil seiner Länge ein zylinderförmiges Profil aufweist und quer zur Längsrichtung des Schaftes (2) angeordnet ist.

3. Steckdübel nach Anspruch 2, **dadurch gekennzeichnet, dass** die Außenfläche des Keilelements (5) eine dem Bohrlochdurchmesser angepasste Abrundung (10) aufweist.

4. Steckdübel nach Anspruch 1, **dadurch gekennzeichnet, dass** das Keilelement (5) über einen rechtwinklig geformten Spritzsteg (7) einstückig am Schaft (2) angebunden ist.

5. Steckdübel nach Anspruch 1, **dadurch gekennzeichnet, dass** am Schaft (2) wenigstes zwei sich gegenüberliegende Paare von Spreizsegmenten (4) hintereinander angeordnet sind.

6. Steckdübel nach Anspruch 5, **dadurch gekennzeichnet, dass** die hintereinander angeordneten Spreizsegmente (4) über einen Spritzfaden (16) miteinander verbunden sind.

7. Steckdübel nach Anspruch 1, **dadurch gekennzeichnet, dass** an dem dem Einsteckende (14) gegenüberliegenden Ende des Schaftes (2) zwei sich gegenüberliegende und in das Bohrloch eingreifende Längsrippen (15) angeordnet sind.

8. Steckdübel nach Anspruch 1, **dadurch gekennzeichnet, dass** der Steckdübel (1) an seinem dem Einsteckende (14) gegenüberliegenden Ende einen Flansch (13) und/oder eine Halterung (17) aufweist.

9. Steckdübel nach Anspruch 1, **dadurch gekennzeichnet, dass** der Steckdübel (1) zwei Schaftelemente (2a, 2b) mit jeweils an der Außenfläche angeordneten Spreizsegmenten (4) aufweist, die die Schenkel eines U-Bügels bilden, dessen Basisabschnitt (18) eine Halterung (17) bildet.

10. Steckdübel nach Anspruch 9, **dadurch gekennzeichnet, dass** die Innenflächen der beiden Schaftelemente (2a, 2b) im Bereich der Spreizsegmenete (4) über einen Teilbereich eine als Querrippen ausgebildete Riffelung (19) aufweisen.

## Claims

1. Push-in plug made from plastics and having at least one shank (2) to be introduced into a drilled hole, on which shank (2) there are located expansion segments (4) lying opposite one another in pairs, the expansion segment (4) being formed by a wedge element (5), which is held on the outer surface (3) of the shank (2) so as to be axially displaceable, wherein the wedge elements (5) are joined to the shank (2) by means of an injection-moulded bridge (7) so that, when the push-in plug is pushed into a drilled hole, the wedge element (5) is axially displaced towards the mouth of the drilled hole to a position in front of an inclined surface (6) formed on the shank (2), which inclined surface (6) rises towards the insertion end (14) of the push-in plug (1), and the outer dimension of the two wedge elements (5) lying opposite one another is compressed to an outer dimension corresponding to the diameter of the hole (8) drilled in the masonry (9), and so that, when a tensile load is applied to the shank (2), the wedge element (5) is displaced on the inclined surface (6) so far towards the insertion end (14) of the push-in plug (1) that wedging in the drilled hole (8) occurs.

2. Push-in plug according to claim 1, **characterized in that** the wedge element (5) has a cylindrical cross-section over a portion of its length and is arranged transverse to the longitudinal direction of the shank (2).

3. Push-in plug according to claim 2, **characterized in that** the outer surface of the wedge element (5) has a rounded form (10) matched to the diameter of the drilled hole.

4. Push-in plug according to claim 1, **characterized in that** the wedge element (5) is integrally joined to the shank (2) by means of an injection-moulded bridge (7) having a right-angled shape.

5. Push-in plug according to claim 1, **characterized in that** at least two pairs of expansion segments (4) lying opposite one another are arranged one behind another on the shank (2).

6. Push-in plug according to claim 5, **characterized in that** the expansion segments (4) arranged one behind another are interconnected by means of an injection-moulded thread-like member (16).

7. Push-in plug according to claim 1, **characterized in that** at the end of the shank (2) remote from the insertion end (14) there are arranged two longitudinal ribs (15), which are located opposite one another and engage in the drilled hole.

8. Push-in plug according to claim 1, **characterized in that** the end of the push-in plug (1) remote from the insertion end (14) has a flange (13) and/or a holder (17).

9. Push-in plug according to claim 1, **characterized in that** the push-in plug (1) has two shank elements (2a, 2b) each having expansion segments (4) arranged on the outer surface, the two shank elements (2a, 2b) forming the legs of a U-shaped clip, the base portion (18) of which forms a holder (17).

10. Push-in plug according to claim 9, **characterized in that** a portion of the inner surfaces of the two shank elements (2a, 2b) has ribbing (19) in the form of transverse ribs in the region of the expansion segments (4).

## Revendications

1. Cheville en matière plastique comprenant au moins une tige (2) destinée à être enfoncée dans un perçage, sur laquelle se trouvent des segments d'expansion (4) se faisant face deux à deux, sachant que le segment d'expansion (4) est formé par un élément en forme de coin (5) fixé sur la surface extérieure (3) de la tige (2) de façon à être mobile dans la direction axiale, sachant que les éléments en forme de coin (5) sont reliés à la tige (2) par le biais d'une barrette extrudée (7) de telle manière qu'en insérant la cheville dans un perçage, l'élément en forme de coin (5) est déplacé dans la direction axiale, vers la sortie du perçage, pour venir se placer devant une surface oblique (6) réalisée sur la tige (2) et montant en direction de l'extrémité d'enfoncement (14) de la cheville (1) et les deux éléments en forme de coin (5) se faisant face sont comprimés pour leur donner une dimension extérieure correspondant au diamètre du perçage (8) dans le mur de maçonnerie (9), et que lorsqu'une force de traction vient à s'exercer sur la tige (2), l'élément en forme de coin (5) est déplacé sur la surface oblique (6) vers l'extrémité d'enfoncement (14) de la cheville (1) jusqu'à ce qu'une immobilisation dans le perçage (8) s'ensuive.

2. Cheville selon la revendication 1, **caractérisée en ce que** l'élément en forme de coin (5) présente sur une partie de sa longueur un profil cylindrique et est disposé transversalement par rapport à l'étendue longitudinale de la tige (2).

3. Cheville selon la revendication 2, **caractérisée en ce que** la surface extérieure de l'élément en forme de coin (5) présente un arrondi (10) adapté au diamètre du perçage.

4. Cheville selon la revendication 1, **caractérisée en ce que** l'élément en forme de coin (5) est relié à la tige (2) par le biais d'une barrette extrudée (7) en angle droit.

5. Cheville selon la revendication 1, **caractérisée en ce qu'**au moins deux paires de segments d'expansion (4) se faisant face se succèdent sur la tige (2).

6. Cheville selon la revendication 5, **caractérisée en ce que** les segments d'expansion (4) sont reliés entre eux par un fil extrudé (16).

7. Cheville selon la revendication 1, **caractérisée en ce qu'**à l'extrémité de la tige (2) qui est opposée à l'extrémité d'enfoncement (14) sont disposées deux nervures longitudinales (15) se faisant face et se mettant en prise dans le perçage.

8. Cheville selon la revendication 1, **caractérisée en ce que** la cheville (1) présente à son extrémité opposée à son extrémité d'enfoncement (14) une bride (13) et/ou un dispositif de fixation (17).

9. Cheville selon la revendication 1, **caractérisée en ce que** la cheville (1) présente deux éléments de tige (2a, 2b) comportant chacun sur la surface extérieure des segments d'expansion (4) formant les branches d'un étrier en U dont le segment de base (18) constitue un dispositif de fixation (17).

10. Cheville selon la revendication 9, **caractérisée en ce qu'**une partie des surfaces intérieures des deux éléments de tige (2a, 2b) présente au voisinage des segments d'expansion (4) une cannelure sous forme de nervures transversales (19).
